# EUROPEAN PATENT SPECIFICATION

(11) **EP 3 178 095 B1**
(45) Date of publication and mention of the grant of the patent: **02.10.2019**
(21) Application number: 15829137.7
(22) Date of filing: 07.08.2015
(51) Int. Cl.: H01B 7/29, C25D 9/12, C25D 17/08, H01B 13/08, H01B 13/16, H01B 1/02, H01B 7/00, H01B 7/42, H01B 9/00, H02K 3/02, H02K 3/30, H01B 3/10, H01B 5/00, H01B 7/02, H01B 7/28

(54) **HIGH TEMPERATURE INSULATED ALUMINUM CONDUCTOR**
HOCHTEMPERATURISOLIERTER ALUMINIUMLEITER
CONDUCTEUR D'ALUMINIUM ISOLÉ RÉSISTANT À DE HAUTES TEMPÉRATURES

(30) Priority: 07.08.2014 US 201462034308 P; 07.08.2014 US 201462034358 P
(43) Date of publication of application: 14.06.2017
(73) Proprietor: Henkel AG & Co. KGaA, 40589 Düsseldorf (DE)
(72) Inventor: DOLAN, Shawn E., Sterling Heights, Michigan 48312 (US); LOMBARDO,Jr., Michael, Harrison Township, Michigan 48045 (US); KUHNS, Eric C., Clinton Township, Michigan 48038 (US); ZIEHM, Mark W., Oakland Township, Michigan 48306 (US); MURPHY, JR., Michael A., Sterling Heights, MI 48314 (US)
(86) International application number: PCT/US2015/044122
(87) International publication number: WO 2016/022871

(56) References cited:
- WO-A1-2013/133334
- WO-A1-2014/133898
- RU-U1- 128 386
- US-A- 2 231 373
- US-A- 2 700 212
- US-A- 4 959 577
- US-A- 5 242 571
- US-A1- 2004 031 620
- US-A1- 2005 061 680
- US-A1- 2015 194 240

## Description

### BACKGROUND

A conventional electrical conductor such as a magnet wire is typically a copper wire coated with a thin sheath of polymeric insulation that is flexible such that the insulated wire can be wound around a magnet to utilize electricity running through the wire to generate a magnetic field. It is used in the construction of a variety of apparatuses which change one form of energy into another or which change power density using the magnetic field, examples include transformers, inductors, motors, generators, speakers, hard disk head actuators, electromagnets, and other electric machines and applications which require coils of wire. Likewise, wires carrying low voltage, such as automobile wiring harnesses and other low voltage electrical and magnetic wire assemblies have conventionally been made of similar sheathed copper wire.

Although copper has better conductivity than aluminum, the demand for aluminum wire has grown due to its lower cost and lighter unit weight (density) compared to copper wire. It takes only one pound of aluminum to equal the current-carrying capacity of two pounds of copper. Aluminum magnet wire is sometimes used for large transformers and motors, but compared to copper has various drawbacks including requiring about twice the cross-sectional area of copper wire to carry the same current, such that large windings or those requiring large cross-sectional area may undesirably increase the size of the device housing the coil; and it would be desirable to reduce the cross-sectional area of the wires, such as by reducing the thickness of insulation on the metal wire.

Electrical conductors such as magnet wire and low voltage wire are conventionally covered with an electrically insulating layer, generally composed of organic material, such as paper, cotton, silk, fiberglass tape or polyester. More recent conventional samples typically use one to four layers of polymer film insulation, often of two different compositions, to provide an insulating layer. These organic coated magnet wires limit the life of the products containing them due to failure in high temperature operation. For example when a drill or small motor is used for extended periods, significant heat is generated. Magnet wire insulating films use (in order of increasing temperature range) polyvinyl formal, polyurethane, polyamide, polyester, polyester-polyimide, polyamide-polyimide (or amide-imide), and polyimide. The general difficulties facing organic coatings are poor performance of the cured coating with respect to corrosion resistance, chemical resistance and high temperature resistance.

Even the most robust organic films, such as polyimide, are resistant to temperatures of only up to about 240 °Celsius (°C). The insulation of thicker square or rectangular magnet wire is often augmented by wrapping it with a high-temperature polyimide or fiberglass tape, and completed windings are often vacuum impregnated with an insulating varnish to improve insulation strength and long-term reliability of the winding. Glass and polyester/glass insulation, such as NEMA Class C insulation, are rated at temperatures greater than polyimide alone, but require winding of filaments around wire and generally include organic material such as polyester fiber, varnish or epoxy. These added steps are labor intensive and still have limited high temperature resistance due to the organic material present.

Attempts to coat wire with inorganic materials have met with limited success in the magnet wire applications. Aluminum wire having an anodized coating of aluminum oxide has various drawbacks including embrittlement and inelasticity of the coating at insulating thicknesses resulting in cracks in the coating, particularly when exposed to temperature cycling. Aluminum oxide also spalls and delaminates at increased temperatures of about 300°C to 450 °C. Manufacturing processes for anodizing aluminum wire also have drawbacks. The sulfuric acid electrolyte used in commercial anodizing has been identified as a carcinogen and thus poses safety and health issues. OSHA limits on sulfuric acid in air are only 1 mg/m³. Anodizing of aluminum is also relatively slow, e.g. anodization of aluminum takes approximately 1 minute to apply 4 microns of aluminum oxide. This and other limitations of alumina coated aluminum wire are reflected in the limited, if any, commercial successes of anodized aluminum magnet wire in the industry. Other attempts to use inorganic materials include sheaths around copper wire with an inorganic powder filling a space between the sheath and the wire. These sheathed products are labor intensive to produce, include the more expensive and heavy copper wire and use thick powder filled spaces which significantly increase the weight and circumference of the wire.

There is an ongoing demand in the aerospace, marine, automotive and equipment industries for a low cost, light weight magnet wire replacement for copper wired electromagnetic coil assemblies suitable for use in coiled-wire devices, such as transducers, including actuators (e.g., solenoids, electric motors, loudspeakers); sensors (e.g., variable differential transducer); transformers (e.g. stepdown transformers for electronics), as well as electric generators and alternators.

In general, an electromagnetic coil assembly includes at least one magnet wire, which is wound around a bobbin or similar support structure to produce at least one multi-turn coil. When designed for usage within a solenoid, the electromagnetic coil assembly often includes a single coil; while, when utilized within a variable differential transducer or a transformer, the electromagnetic coil assembly typically includes a primary coil and one or more secondary coils. In conventional, non-high temperature electromagnetic coil assembly, the insulation is commonly formed from a plastic or other readily-available organic dielectric material. Organic materials, however, rapidly decompose, become brittle, and ultimately fail when subjected to temperatures exceeding approximately 260 °C; and are consequently unsuitable for usage within electromagnetic coil assemblies that exceed about 250 °C during normal or peak usage. Even at temperatures lower than 260 °C, temperature cycling between ambient temperature and peak use temperature tends to age organic insulation. There is a need for magnet wire capable of providing prolonged and reliable operation in high temperature environments characterized by temperatures exceeding 250 °C.

Conventional organic-based insulation also has the drawback of poor resistance to "hot spots", which are points of localized increased temperature on a wire assembly. These are commonly found in proximity to operating engines, manifold and exhaust assemblies and the like, where unintended and/or intermittent contact between, for example, wiring, wiring harnesses and connections causes melting or decomposition of the insulation resulting in electrical current passing out of the wire and electrical short circuiting.

US 2015/061680 A1 relates to corrosion-, heat- and abrasion-resistant coatings on aluminum and discloses a method for providing a protective coating chemically bonded to the outer surface of the aluminum substrate, comprising at least one non-aluminum metal oxide, namely an 8 µm thick layer of ceramic predominantly comprising titanium dioxide.

Considering the above, it is desirable to provide embodiments of coated wire suitable for use where temperatures exceed 250 °C, e.g. hot spots, and/or in an electromagnetic coil assembly for usage within coiled-wire devices (e.g., electric machines, solenoids, variable differential transformers, and two position sensors, etc.) suitable for operating in high temperature environments characterized by temperatures exceeding 260 °C and up to about 640 °C. Preferably, embodiments of such an electromagnet coil assembly would be relatively insensitive to radiation and well-suited for usage within nuclear applications. It is desirable to provide embodiments of a method for manufacture such a high temperature electromagnetic coil assembly.

### SUMMARY

A method of making an aluminum or aluminum alloy metal electrical conductor as specified in Claim 1 having a high temperature resistant insulating coating is provided. Thereby on the aluminum or aluminum alloy conductor an electrically insulating metal oxide coating layer is deposited that comprises at least one non-aluminum metal oxide. The insulating metal oxide coating layer is chemically bonded to the aluminum or aluminum alloy conductor.

The electrical conductor is provided with an electrically conductive core having an outer surface, where the core comprises aluminum. An electrically insulating coating is chemically adhered directly on the outer surface of the core. The coating comprises at least one non-aluminum metal oxide, and is electrically resistant at high temperatures.

According to this object of the invention the electrical conductor comprises: an electrically conductive core having an outer surface, the core comprising aluminum; and an electrically insulating coating chemically bonded directly on the outer surface of the core, the coating comprising at least one non-aluminum metal oxide, the coating being electrically resistant at high temperatures.

In this object of the invention the electrical conductor maintains an electrical resistance of at least 3 Megaohm per centimeter at ambient temperature after thermal cycling to at least 600 °C.

In this object of the invention the at least one non-aluminum metal oxide comprises titanium dioxide and the conductor is an aluminum or aluminum alloy conductor. In a preferred object of the invention the coating has a thickness being in a range of 0.5 to 50 microns.

In a preferred embodiment the object of the invention is to provide a method of making an electrical aluminum or aluminum alloy conductor as a wire wherein the core comprises an aluminum alloy.

In another preferred embodiment of the object of the invention an the electrically insulating coating is homogenous. In yet another preferred embodiment of the object of the invention the electrically insulating coating further comprises aluminum oxide and has an interface with the outer surface of the core; and wherein aluminum oxide concentration is greater at the interface with the outer surface of the core and decreases with increasing distance away from the interface.

In a preferred embodiment of the object of the invention the electrical conductor further comprises an electrically insulating shell surrounding the coating, such that the coating is positioned between the shell and the core. In a further preferred embodiment the electrically insulating shell comprises an enamel, a sealant, an organic coating.

According to the object of the invention the electrically insulating coating is formed by a method comprising: contacting a bare wire with a bath containing an aqueous solution with a precursor for the electrically insulating coating including the element Ti, the bare wire providing the core; operating an electrification device in electrical communication with the bare wire to electrify the bare wire with a peak voltage of at least 140 volts up to 800 volts and an effective current of at least 20 amps and up to 1000 amps per wire and such that the bare wire acts as an anode; and electrochemically reacting the bare wire with the precursor in the bath to deposit the electrically insulating coating on an outer surface of the wire thereby producing the coated electric conductor. In a preferred embodiment of the invention the method of making the conductor further comprises: continuously feeding bare wire through a bath having a cathodic connection and containing the aqueous solution comprising a precursor for an electrically insulating coating; passing the electrified bare wire through the aqueous solution comprising a precursor for an electrically insulating coating in the presence of the cathodic connection thereby passing current from the electrified bare core through said aqueous solution to the cathodic connection for a dwell time sufficient to result in the electrochemically reacting of the wire; and continuously removing the coated electric conductor from the bath.

### BRIEF DESCRIPTION OF THE DRAWINGS

FIGURE 1 illustrates a cross section of an electrical conductor as a wire over-coated with an electrically insulating coating according to an embodiment;
FIGURE 2 illustrates a cross section of an electrical conductor as a wire over-coated with an electrically insulating coating according to another embodiment;
FIGURE 3 illustrates a schematic of an electric machine having an electrical conductor as magnet wire in a coil;
FIGURE 4 illustrates a schematic of a transformer having an electrical conductor as magnet wire in the primary and secondary coils;
FIGURE 5 illustrates a schematic of a speaker having a voice coil containing the electrical conductor according to an embodiment;
FIGURE 6 illustrates a wiring harness for an automobile containing an electrical conductor according to an embodiment; and
FIGURE 7 illustrates a schematic of process steps for coating an electric conductor according to an embodiment.

### DETAILED DESCRIPTION

Except in the examples, or where otherwise expressly indicated, all numerical quantities in this description indicating amounts of material or conditions of reaction and/or use are to be understood as modified by the word "about" in describing the broadest scope of the invention. Also, unless expressly stated to the contrary: percent, "parts of," and ratio values are by weight; the description of a group or class of materials as suitable for a given purpose in connection with the invention implies that mixtures of any two or more of the members of the group or class are equally suitable; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies mutatis mutandis to normal grammatical variations of the initially defined abbreviation; and, unless expressly stated to the contrary, measurement of a property is determined by the same technique as previously or later referenced for the same property. It must also be noted that, as used in the specification and the appended claims, the singular form "a," "an," and "the" comprise plural referents unless the context clearly indicates otherwise. For example, reference to a component in the singular is intended to comprise a plurality of components. The term "homogenous" as used herein refers to a layer which has the same composition throughout. In a refinement, the term refers to a layer that has the same composition on a size scale greater than 100 nm. For examples, a homogenous layer is not a layer having particles dispersed within a binder and in particular, a resinous binder. The term "insulating" as used herein refers to an electrical insulating property, measured as an electrical resistance.

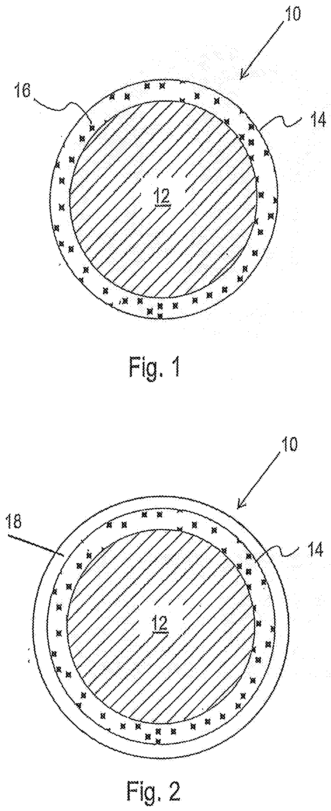

Figure 1 illustrates a cross section view of an electrical conductor 10. The electrical conductor may be provided as a wire 12, and may have various cross sectional shapes, including circular as shown, rectangular, trapezoidal, and others as are known in the art. The electrical conductor may be a single strand that is coated with a coating 14 having a plurality of pores 16, as shown. The pores 16 define at least in part the increased surface area of coated wire as described herein. Desirably, the wire 12 or other electrical conductor may be formed using aluminum or various aluminum alloys and the coating 14 can be an electro-ceramic coating comprising metal oxides in addition to or instead of aluminum oxide.

The electrical conductor may be a bundle of wires, such as multistranded wire or braided wire where individual strands are individually coated or coated as a bundle. For a bundle of wires forming the conductor, only some of the wires may be coated. In one variation, all of peripheral wires are coated with an electrically insulating coating, and in other variations, at least one of an interior wire is also coated with the electrically insulating coating. In some applications, all of the wires in the bundle are coated with the electrically insulating coating.

Conventionally, electrical conductors, such as magnet wire and low voltage wire, are generally covered with an electrically insulating layer composed of organic material or enamel, and may require one to four layers of polymer film and/or fiber insulation, often of two different compositions, to provide an insulating layer. Even the most robust organic films are resistant to temperatures of only up to about 240 °C. The coating 14 applied in a method of this invention according to Claim 1 provides improved high temperature resistance such that coating 14 on magnet wire and low voltage wire has insulation that is resistant to temperatures of greater than 600 °C. The coating 14 is chemically bonded to the aluminum wire such that the electrically insulating properties of the coating are not destroyed with temperature cycling. Additionally, the electrochemical coating 14 shows resilience to large temperature changes and thermal shocks without damaging the coating or losing its electrical insulating properties. Wire coated with the electrochemical coating is also protected from corrosion, which is beneficial for both unsealed uses of the electroceramic coating and for insulated wires having the electroceramic coating as a first layer followed by other insulating layers. The electroceramic coating provides improved adhesion and sealing of the aluminum wire by the organic layers due to intimate contact at the interface of the organic layers and electroceramic coating due to increased surface area of the electroceramic coating compared to the bare aluminum wire surface area. The electroceramic coating also acts as a barrier between the aluminum wire and any moisture or condensation that penetrates an outer organic coating on the aluminum wire.

In one aspect of the method of making the aluminum or aluminum alloy conductor the electrically insulating metal oxide coating layer comprises at least one non-aluminum metal oxide chemically bonded to the conductor with no additional insulation or covering on the coated wire. Desirably, the electrical application may operate at 120 volts or less and in applications approaching 640 °C when the coating on the conductor is otherwise unsealed. Magnet wire is one example of use of such conductor. Magnet wire is used widely in numerous electrical devices to change electrical energy to magnetic energy, and magnetic energy into electrical energy, for a variety of uses. Magnetic energy can be used to change or generate electrical energy; generate mechanical motion, e.g. sound or physical actuation; and the like. Suitable examples using such wire include electrical motors; power tools, such as drills; windings on transformers, e.g. step down transformers in cell phone chargers; electromagnets; inductors, e.g. for use in circuit boards; various types of sensors; variable differential transducers; solenoids; speakers; etc.

Alternatively, where extreme temperature resistance is not required, the electroceramic coated wire may be used for higher voltage applications, that is greater than 120 Volts, provided that it is properly sealed or coated with a material having insulating ability at such higher voltages. Numerous sealers and organic layers known in the art can be employed to increase the breakdown resistance of the electroceramic coated conductor such that higher voltage does not result in loss of the electrical insulation of the conductor 10. Suitable uses for this aspect of the disclosure include conductors for use in corrosive environments, such as salt water, chemical plants, and are useful in automotive, marine, industrial and aerospace applications.

In another aspect, as shown in Figure 2, the oxide layer 14 is the innermost base layer of electrical insulation on the conductor 10 and is covered by one or more additional insulation layers 18 as are known in the electrical arts, such as a conventional organic coating or enamel or shell as described above. Suitable examples of such wiring may be for safety and sensor wiring. This may be particularly useful in automotive applications to prevent short circuit of critical wiring, for example for brake lights, tail lights, trailer lights and airbag applications. If the outer conventional organic insulation 18 is compromised through melting, burning, corroding, or the like by exposure to a hot spot, salt or other corrosive environment, the inner base coating layer of metal oxide prevents short circuiting of the conductor 10.

Unlike commercially available organic coated wire products, the electrical conductor 10 made in accordance with the present invention can sustain high operating temperatures without deterioration. The melting point of pure aluminum is 660 °C and the electroceramic coatings do not melt and remain intact well above that temperature, such that heat degradation of insulation is reduced as a failure mode for coated wires according to Figure 1. While most organic coatings, e.g. enameled products, begin to deteriorate at between about 90 to 240 °C and aluminum oxide anodized films crack and craze at 300 - 450 °C, the insulating coatings 14 according to the present disclosure have been tested to temperatures as high as 620 °C and contacted with a heat source of 700°C with no visible alteration in the appearance, and more importantly, while maintaining a high electrical resistance. This makes the conductors particularly useful in high temperature applications for electromagnetically driven devices, such as solenoids, stators in electric machines, coils, chokes and transformers.

Thermal cycling is an important measure of electrical device durability, particularly where the devices are subjected to intermittent use, such as some electrical motors, adaptors and chargers for electronics and the like. The coatings made in accordance with the present invention are resistant to thermal cycling, across as much as about 800 °C of temperature differential, without electrical insulation failure. That is, the conductor made according to the present invention does not experience any short circuiting of the conductor.

An article of manufacture comprising a coil of magnet wire coated according to the present invention may be provided, the article can be selected from transformers, inductors, motors, speakers, hard disk head actuators, electromagnets, and other devices incorporating electromagnetic coils or windings. Such articles provide the same power rating, e.g. motors and the like, with significantly reduced motor weight and increased range of temperature performance allowing higher temperature operation of, for example, solenoids and motors without damaging the insulation which prevents device failure. Aluminum has less than 1/3 the density of copper and an aluminum conductor weights about ½ as much as a copper conductor of equal resistance and equal length. The weight reduction with only microns thick insulating coating is particularly useful in aerospace and automotive applications where light weighting of products yields long term energy savings. The lighter-weight aluminum conductor also provides superior performance compared to copper in magnet wire used for moving windings, e.g. rotating windings and the like. The lower mass of aluminum results in lower inertia of the moving winding providing higher sensitivity and response in moving coils.

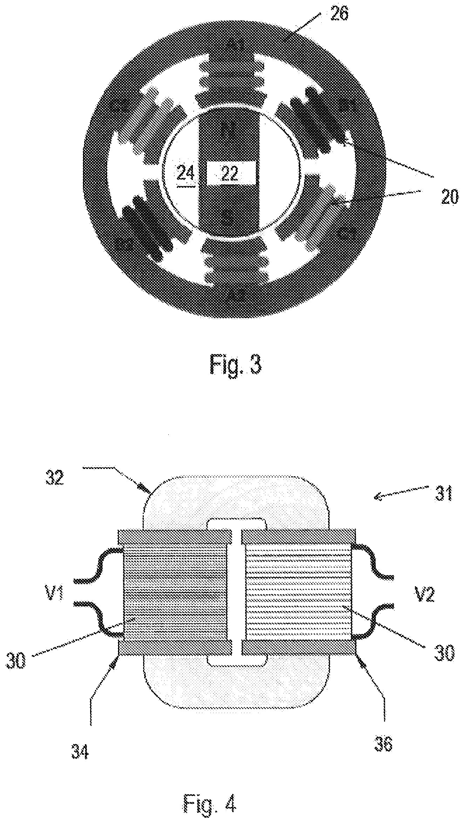

An electric machine may be an electric motor, an electric generator, or another device using a magnetic coil. An electric machine may be an electromechanical energy conversion device configured to change electricity into motion or motion into electricity. An electric machine may also be a device that changes electricity, e.g. electrical energy, into a magnetic force. Examples of electric machines include transducers, hard disk head actuators, solenoids, electric motors, electric generators, alternators, voice or speaker coils, and the like. In one example, an electric machine is illustrated in Figure 3. The electric machine as illustrated is an electric motor and has a magnet 22, a rotor 24 and a stator 26. The stator 26 is provided with coils 20 of magnet wire. The electric motor may be any one of a number of types of motors having a winding or coil including: direct current (DC), alternating current (AC), self-commutated, externally commutated, brushless, asynchronous, synchronous, and the like. In another example, the rotor is provided with the coils. The coil 20 may be provided as a field winding and/or an armature winding. The magnet wire in the coils 20 may be the coated electrical conductor made according to the present invention and as illustrated and described with respect to Figure 1 or Figure 2.

In another example, another electric machine is illustrated in Figure 4. The electric machine transforms electricity into a magnetic force, and possibly back into electricity. Examples of electric machine devices include transformers, inductors, electromagnets, and the like. The electric machine as illustrated is a transformer 31 with a magnetic core 32, a primary coil 34 and a secondary coil 36. Both coils 34 and 36 are provided with magnet wire 30. V1 and V2 represent two different voltages resulting from transformation of a voltage in one coil into a different voltage in the other coil. The magnet wire 30 may be the coated electrical conductor made according to the present invention and as illustrated and described with respect to Figure 1 or Figure 2.

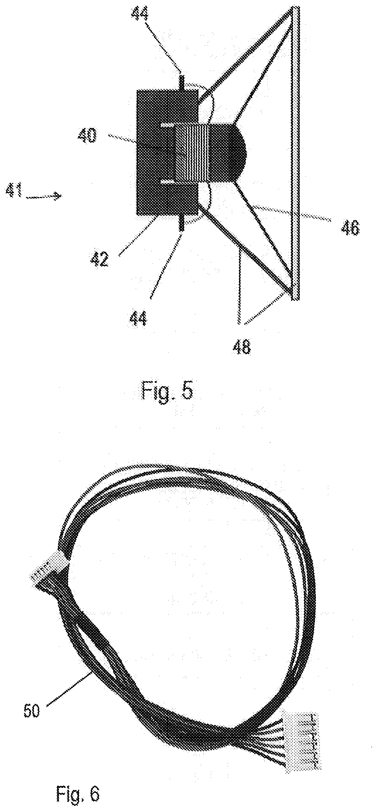

A voice coil actuator is illustrated in Figure 5. A voice coil actuator may be used in a speaker, transducer, and other applications. The voice coil actuator as illustrated is a speaker 41 with a voice coil 40, a magnet 42, signal inputs 44, diaphragm 46 and frame 48. When an electrical signal is applied to the voice coil, the magnet and coil interact, generating a mechanical force that causes the diaphragm 46 to move back and forth, thereby producing sound. The voice coil 40 is provided with magnet wire. The magnet wire in the coil 40 may be the coated electrical conductor made according to the present invention and as illustrated and described with respect to Figure 1 or 2.

A solenoid may be provided with a magnet wire coil with the electrical conductor as described and illustrated with respect to Figure 1. Examples of solenoids with magnet wire include valves, door locking mechanisms, and the like. Normally closed solenoids that need to remain open for long periods of time show improved durability and continue to work without failure because of the drastically enhanced durability of the insulation coating attained according to the present invention.

A wiring harness is illustrated in Figure 6. The wiring harness may be used to transmit signals and/or electrical power between components. The wiring harness may be used in a variety of applications, and includes automotive, aerospace, marine, consumer products, and others. The wiring harness illustrated has a bundle of wires with various connectors on each end. Each wire 50 of the harness may be an electrical conductor as described and illustrated with respect to Figure 1. In another example, each wire 50 of the harness may be an electrical connector as described and illustrated with respect to Figure 2.

In one aspect, the initial insulating properties, i.e. electrical resistance to conductance through the insulating coating, and insulating properties after high temperature exposure remain significantly higher than fresh copper magnet wire. In another aspect, aluminum conductor made according to the present invention has lower stray current losses compared to copper, which is an improvement over conventional products and is less expensive than copper.

In a refinement, insulating coating 14 comprises at least 10 weight percent aluminum oxide of the total weight of the insulating coating and the at least one metal oxide that is not aluminum oxide. In another refinement, insulating electro-ceramic coating 14 may include aluminum oxide in an amount of at least, 5, 10, 15, 20, 25, or 30 weight percent of the total weight of the coating and independently may include aluminum oxide in an amount of at most, 80, 75, 70, 60, 50, or 40 weight percent of the total weight of the coating.

In some embodiments, the metal oxide or oxides other than aluminum oxide are present in an amount of at least 10, 15, 20, 25, 30, 35, 40, 45, or 50 weight percent of the total weight of the insulating coating and at most 95, 90, 85, 80, 75, 70, 65, 60, 55 weight percent of the total weight of the coating.

The electrically insulating electro-ceramic coating 14 is directly, chemically bonded to the conductor or wire substrate surface and has an interface with the metal surface. Inclusion of aluminum, at least partially from the metal surface into the electro-ceramic coating 14 provides improved adhesion of the coating. In a variation, the aluminum oxide concentration varies over the thickness of the insulating electro-ceramic coating, wherein amount of aluminum oxide is greater at the coating substrate interface and generally decreases with increasing distances away from the wire substrate metal surface. For example, the aluminum concentration may be 10 to 50 percent greater at 0.1 microns from the interface than at 3, 5, 7, or 10 microns from the interface.

In the method of this invention the metal oxide other than aluminum oxide includes titanium dioxide. The oxide coating can advantageously be a homogenous electro-ceramic layer prepared as set forth below in more detail. The insulating coating 14 may include the aluminum oxide and oxides other than aluminum oxide in combination in homogeneous form such that the insulating electro-ceramic coating can be the same throughout. Alternatively, coating 14 may include the aluminum oxide and the other non-aluminum metal oxide combination in a form having domains (e.g., grains or crystallites) of the aluminum oxide and domains of the oxides other than aluminum oxide. The electro-ceramic coating 14 may have amorphous and crystalline regions. This variation does not include a binder resin or matrix to hold the oxide mixture. The coating 14 does not include sintered monoliths, casements or ceramic bodies or loos or compressed powdered oxides, but instead is a coating chemically bonded to the aluminum or aluminum alloy wire.

In a refinement, coating 14 may be in direct contact with the underlying bare aluminum or aluminum alloy wire and can be also exposed to environment. The coating 14 provides an electrically insulating coating for the bare wire 12, and has a higher resistivity than the bare wires 12, such as aluminum. By coating the wire 12 in the conductor 10, the wire is electrically insulated, to prevent the wire from shorting, etc. during use.

. The electrically insulating coating 14 provided with titanium dioxide may have an electrical resistance of 3, 4, 5, 6, 7, 10, 15, 20, or 30 Megaohms per centimeter. In another example, the coating 14 may have an electrical resistance of 10, 15, 20, 25, or 30 Megaohms per centimeter after the coating process and before the electrical conductor is used in an application.

Titanium dioxide is a semiconductor material with a relatively high band gap. Electroceramic coatings containing titanium dioxide and aluminum oxide as disclosed herein were tested for dielectric strength using a GW Instek Model GPT 815, dielectric breakdown testing device, according to ASTM D149-09 (2013) test specification. Measurements indicate that the coatings 14 had a dielectric strength of 180-300 Volts at 10 micrometers, as measured ASTM D149-09 (2013). As such, the coating 14 may be used as the sole electrical insulator for the conductor 10 in applications ranging from fractions of a Volt up to and including 120 Volts. When an application uses a voltage above the dielectric strength of the material, the material may allow leakage of current. A benefit of titanium dioxide coating on aluminum wire as compared to organic, e.g. plastic, insulation is that short term voltage surges above 120 volts may allow leakage, without permanent damage to the insulating ability of the coating at lesser voltages. In contrast, a short circuit of an organic coated wire irreversibly damages the insulation, creating a permanent arc spot or short in the wire.

Additionally, the coating 14 as described herein may be heated repeatedly up to approximately 600, 610, 620, 630 or 640 °C, or near the melting temperature of the underlying wire 12 while maintaining the electrical resistance of the coating, as shown below in the examples. This makes the coating 14 useful in high temperature applications that would otherwise be unavailable for a conventional insulating coating.

The insulating coating 14 typically increases wire surface area compared to bare wire surface area. The increased surface area provides for increased radiative emission from the wire, as well as improved convective cooling. This may aid in thermal management of the electrical conductor 10 or the device itself in various high temperature applications or devices. In this regard, the coating 14 may have a surface area from 10 and 1000 times greater than the surface area of a bare wire (e.g. aluminum or aluminum alloy) before being coated with the coating. In a refinement, the coating 14 may have a surface area at least 100 times greater than the surface area of a bare wire before being coated with the insulating coating. In another refinement, the coating 14 may have a surface area approximately 700 times greater than the surface area of a bare wire before being coated with the insulating coating. The surface area can be determined by the BET method which is set forth for example by ASTM C1274-12. In other refinements, the coating 14 typically has a surface area that is about 10, 20, 30, 40, 50, 60, 70, 80, 90, 100, 120, 130, 140, 150, 170, 180, 190, 200 times greater than the surface area of the underlying coated wire, e.g. than that of a bare wire. In a further refinement, the coating 14 has a surface area between 100 to 1000 times greater than the surface area of the underlying coated wire, e.g. than that of a bare wire. In yet other refinements, the coating 14 typically has a surface area less than 1000, 500, 400, 350, 300, 250, or 225 times greater than the surface area of the underlying coated wire, e.g. than that of a bare wire. In general, a wire having electro-ceramic coating deposited thereon may have a surface area that is about 10, 20, 30, 40, 50, 60, 70, 80, 90, 100, 120, 130, 140, 150, 170, or 200 times greater than the surface area of the underlying coated wire and less than 1000, 950, 900, 850, 800, 750, 700, 650, 600, 550, 500, 450, 400, 350, 300, 250, 225 times greater than the surface area of the underlying coated wire. According to one example, coating 14 increases the surface area of a wire by one to two orders of magnitude, i.e. ten times or one hundred times, or the like. In a further example, the BET surface area of the coating can be 140-700 times the BET surface area of the bare metal wire, and has a weight of 800 mg per square foot. In another example, the surface area of the insulating coating 14 can be in the range of 100-1000 times the cross sectional area, and in a further example is 700 times the cross sectional area.

The insulating electro-ceramic coatings are typically stable in ultraviolet (UV) light. Additionally, the coatings 14 may be scratch resistant, and may be able to bend with the wire 12 or the coated wires without delaminating, cracking or breaking. The coatings 14 are sufficiently thin such that they do not significantly increase the overall weight of the electrical conductor. In one example, the insulating coatings are generally at least about 1, 3, 5, 7, 9, 10, 11, or 12 microns in thickness, and are generally not more than about 25, 20, 28, 16, 15, 14, or 13 microns in thickness. In a further example, the insulating coatings are between 0.5 to 50 microns in thickness. In some examples, the insulating coatings increase the mass of the substrate from 4 to 20 g/m², depending on thickness and chemical composition.

The coating 14 may be typically a uniform coating having a constant or generally constant thickness about the perimeter of the wire 12. Desirably, this uniformity is achieved in the absence of a polishing, grinding or other removal of coating. In one embodiment, thickness may vary by 0 to 25%, for example at least 1, 3, 5, 7, 9 or 10 %, and desirably no more than 25, 20, 18, 16, 14, or 12%, with higher tolerances being acceptable with thicker coatings. The electrically insulating electro-ceramic coating provides for electrical insulation of the bare wire 12. The coating 14 on the wire has been demonstrated to pass a T-bend test of 0T-1T showing a high bend strength and high adhesion to the wire to provide flexibility under weathering conditions and subjected forces during use.

The coating 14 may have a plurality of pores 16. These pores 16 define at least in part the increased surface area of coated wire as set forth above. The pores 16 may also provide a surface for improved chemical and mechanical adhesion of any additional coatings or shells on the conductor 10, such as an organic insulating layer or an additional high voltage sealer.

As set forth above, the wire 12 includes a high surface area, highly electrically resistive coating disposed over its surface. In particular, these coatings may be prepared by the processes set forth in U.S. Pat. Nos. 6,797,147; 6,916,414 and 7,578,921. In general, the coatings are formed by the method of this invention in which a bare wire is contacted with a bath containing an aqueous solution with a precursor for the electro-ceramic coating. The bare wire is electrified with a high voltage and a high current; and electrochemically reacts with the precursor in the bath to provide the electrically insulating coating on an outer surface of the wire. As used herein "high voltage" used in the coating apparatus and process includes peak voltage potential of at least about 140 volts up to about 800 volts; "high current" as used herein includes effective current of at least about 20 amps and up to about 1000 amps per wire. These values may be varied while practicing the continuous coating process within power applied ranges of at least 10, 20, 30, 40 or 50 kW per wire. Greater kW may be applied to a wire provided the wire has great enough cross-sectional area to withstand the added kW without damage to the wire.

Direct current and/or alternating current can be used. In some embodiments, the current may be a square wave form pattern with a frequency of approximately 0.01-40 milliseconds. Frequency may be adjusted from 25Hz to 25,000 Hz, may be high frequency such as 200-25,000 Hz or 100-10,000 Hz. Waveforms may include sinusoidal, triangular, and/or rectangular in any of AC, DC or pulsed DC current, as well as complex waveforms containing superimposed waveforms, e.g. an AC waveform over a DC waveform.

High current is an effective current at or greater than about 20 - 1000 Amps per wire. As wire size increases so does current carrying capability without damage to the wire. During electrolytic coating, too much current through a wire may result in excessive heating of the wire, resulting in embrittlement of the wire. Depending upon the gage of wire to be coated the amperage may be adjusted to at least 20, 30, 40, 50 , 60, 70, 80, 90, or 100 Amps and preferably not more than 1000, 800, 600, 400, 300, 200 180, 160, 140, 120 Amps per wire, i.e. a single strand of wire, for high tension wire. Applied current may be alternating current, asymmetric alternating current, direct current, or pulsed direct current. In some examples, direct current is used and may be applied as an on/off waveform. In one embodiment, a total period of the waveform is at least 0.01, 0.1, 1 or 10 milliseconds and up to 50, 40, 30, 20 or 15 milliseconds. Waveforms may be adjusted to a ratio of at least: 0.1, 0.3, 0.6, 1.0, 1.2, 1.5, 1.7, 2.0, 2.2, 2.5, 2.8, 3.0, 5.0, 10.0, or up to an infinite ratio where the direct current is always on and there is no off portion, also referred to as straight DC.

Generally, residence time ranges from about 1, 2, 3, 4, 5, 6, 8, or 10 seconds and at least for efficiency is not more than 180, 160, 140, 120, 100, 60, 45, 30, 20 or 15 seconds. In one example, the residence time is approximately five to ten seconds. Generally, feed rate or wire speed is dependent upon achieving sufficient residence time for desired coating properties, e.g. thickness, surface area and resistivity, and desirably can range from about 10 feet per minute to about 200 feet per minute. Higher speeds may be used provided that residence time is maintained.

In another embodiment, the resistivity of the coating is modified by changes in the identity of the electroceramic coating precursors in the electrolytic bath. According to the present invention the precursor elements include Ti. The chemical precursors used for forming the electrically insulating coating are preferably free of the following chemicals: chromium, cyanide, nitrite ions, oxalates; carbonates; silicon, e.g. siloxanes, organosiloxanes, silanes, silicate; hydroxylamines, sodium and sulfur. Specifically, it is increasingly preferred in the order given, independently for each preferably minimized component listed below, that precursor for the electro-ceramic coating according to the invention, when directly contacted with metal in a process according to this invention, contain no more than 1.0, 0.35, 0.10, 0.08, 0.04, 0.02, 0.01, 0.001, or 0.0002 percent of each of the following constituents: chromium, cyanide, nitrite ions; oxalates; carbonates; silicon, e.g. siloxanes, organosiloxanes, silanes, silicate; hydroxylamines, sodium and sulfur.

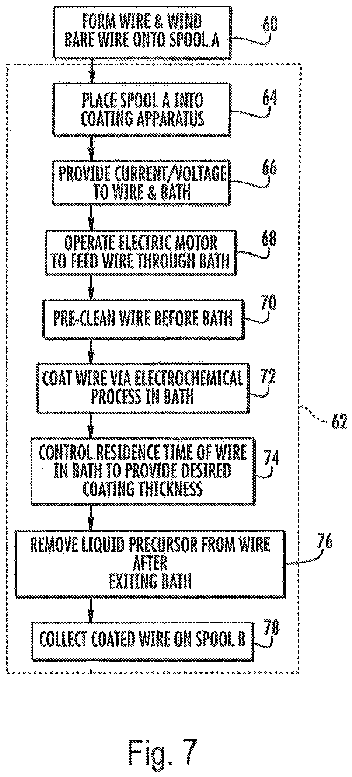

The aluminum or aluminum alloy wire used in the conductor 10 may be continuously coated with an electro-ceramic stable coating. The coating may be applied during a continuous process. In one example, the continuous process is provided as illustrated in Figure 7.

In Figure 7, in step 60, metal is formed into wire; this is an optional step in the process. Starting with a metal workpiece, an extrusion process, drawing process, or other metal-forming process may be used to generate a bare wire using aluminum or an aluminum alloy. Alternatively, step 60 may comprise obtaining commercially available bare aluminum wire of desired geometry and providing same to the coating line.

In processes according to the invention, bare wire may be provided on a spool, reel or other wire carrier, which may be used to feed wire into the coating process. Desirably, the wire carrier for feeding the bare wire into the coating process comprises a spool, reel or the like about which the bare wire is wound. Bare wire will be understood by those of skill in the art to mean wire having surfaces of metallic aluminum or an aluminum alloy in the absence of a durable applied coating or sheathing, such as paint, insulation, conversion coatings and the like; bare wire may include some contaminants such as forming lubes, oils, soils and a thin alumina layer formed by environmental oxidation, as well as temporary treatments applied for transport to reduce damage to wire surfaces. In one non-limiting example, wires may have various diameters as is known in the art for electrical conductors for use with electrical power applications up to approximately 120 Volts.

In one embodiment, the bare wire is coated using a coating sub-process for a wire, shown collectively as block 62. Processes according to the invention may include a greater or fewer number of steps, different variations of a step, and various steps in the process may also be ordered differently from the illustrated flow chart in other embodiments. For example, bare wire having only minor amounts of contaminants on the wire surfaces, may be coated in the absence of a pre-cleaning step or heavily contaminated wires may benefit from a pre-clean step with several sub-steps such as cleaning, pickling and rinsing.

In Figure 7, at step 64, spool A containing bare wire is connected to, e.g. placed in, or on, a coating apparatus. The bare wire end is fed through the coating apparatus and connected to a spool B. Spool B is designated as a spool having coated wire thereon. A short section of wire on spool B may be uncoated based on the initial setup of the apparatus before operation, e.g. connection of the bare wire end to Spool B provides a short initial length of uncoated wire on Spool B. In other embodiments, the bare wire is fed directly into the coating apparatus from another process, such as a metal forming or other metal treatment process, and there is no feed spool, e.g. spool A, provided. Likewise, the coated wire may be directly fed into other processing stations after coating instead of onto a collecting spool, such as an additional coating step for an enamel or organic shell or coating. The foregoing integrated processes may be used provided that the current running through the coating solution and the electrified wire does not interfere with other operations and is not unfavorable from an economic or health and safety view.

At step 66, the wire in the apparatus is electrified to a high current and a high voltage, as described herein, using an electrification device such that the wire acts as an anode within the bath of a solution containing chemical precursors for the coating. In one example, the electrification device is a rotary switch having a contact wheel that rotates with passage of the wire as the wire is fed through the process, and the device may include a liquid mercury rotary contact. A cathode is provided within the bath. Both the electrification device and the cathode are electrically connected to a power source, which when activated passes current to the wire via the electrification device, the electrical current passing from the anodic wire through solution to the cathode.

At step 68, a motor is operated to feed wire through the bath to coat the wire. The type of motor to be used is not particularly limited in any way, and can include for example an electric motor, an internal combustion engine, motors based on pneumatic or hydraulic power or the like. If only for economy, an electric motor is preferred. In one embodiment, speed of the wire is adjustable based on a feedback loop providing data on coating features, such as coating thickness measured, for example in real time or otherwise to a controller. In one embodiment, a user interface is provided for monitoring wire speed, motor parameters and allows making changes to same with adjustment and / or other devices associated with the apparatus.

At step 70, a cleaning device, such as a spray system, an acid or alkaline cleaning bath, ultrasound device, deoxidizing bath and/or an air knife, may be operated to clean the bare wire before it enters the solution in the coating bath. In one example, a spray system provides high pressure deionized water to clean the wire. The cleaning process can provide a better and more uniform substrate surface for coating deposition, and may also reduce introduction of debris or other contaminants into the coating bath.

At step 72, the wire proceeding through the bath is coated via an electrochemical process thereby providing a ceramic coating on the surface of the wire. In one embodiment, the solution in the bath is an aqueous solution containing a coating precursor comprising a source of titanium and a source of phosphorus. In one example, the aqueous solution contains H₂TiF₆ and a source of phosphorus. An electro-ceramic coating is deposited on the wire surface which comprises oxides of metals from the substrate and from the solution. In one embodiment, an oxide coating, which comprises aluminum oxide and titanium dioxide, is formed on the surface of the aluminum wire. Desirably, aluminum oxide is present in the coating in amounts of 1-25 wt.%, with the remainder comprising titanium dioxide and non-zero, small amounts of elements from the bath. In one example, the coating includes aluminum oxide in an amount of at least, 5, 10, 15, 20, or 25, or 30 weight percent of the total weight of the insulating coating. In another refinement, electro-ceramic coating includes aluminum oxide in an amount of at most, 80, 75, 70, 60, or 50, or 40 weight percent of the total weight of the insulating coating. Typically, the metal oxide or oxides other than aluminum oxide are present in an amount of at least 20 10, 15, 20, 25, 30, 35, 40, 45, or 50 weight percent of the total weight of the insulating coating. In a variation, the aluminum oxide concentration varies over the thickness of the insulating coating being greater at the coating substrate interface and generally decreasing as with increasing distances away from the wire substrate. For example, the aluminum concentration may be 10 to 50 percent higher at 0.1 microns from the interface than at 3, 5, 7, or 10 microns from the interface.

A visible glow or visible light discharge may occur along the surface of the wire as the coating is being formed. The electrochemical process may be a plasma process. The wire provides an anode connection with oxygen radicals reacting with titanium anions at the surface of the wire to form a titanium oxide, such as titania. Protons at the cathode connection in the bath may lead to formation of hydrogen gas as water in the aqueous solution is electrolyzed, which desirably may be controlled and removed by one or more optional hoods or venting systems. In other examples, other chemical solutions may be used to provide a coated wire.

At step 74, a control system including a controller is used to control the speed of the motor, and the speed of the wire. By changing the speed of the wire, the residence time of the wire in the bath may be controlled, thereby together with other process parameters, controlling the thickness of the coating and the amount of dissolution of aluminum from the wire. Longer residence times for the wire may also be obtained by for example, defining a longer path through the bath. The thickness of the coating may also be controlled by modifying the wave form and / or voltage utilized. The control system is also useful in adjusting spool speed for spools A and B. For wire provided on a spool, to maintain a constant speed of wire travel through the bath as the wire is taken off of spool A, the rotational speed of spool A may be increased to compensate for the smaller amount of wire provided by each rotation. Likewise, as the coated wire accumulates on spool B, to maintain the same feed velocity of the wire, the rotational speed of spool B may be decreased to compensate for the greater amount of wire accumulated during each rotation around the increasing circumference of spool B due to added coated wire. An accumulator, which may store up to perhaps 300 meters or more of wire ahead of the main section of the processing line, may be utilized to control wire speed and contact time in the bath. The control system may also control a cooling system connected to the bath to cool the solution and maintain the solution temperature within a predetermined range, desirably from ambient temperature, generally about 20 °C to less than 100, 95, 90, 80, 70, 60, 50 or 40 °C.

At step 76, after the wire leaves the bath any excess solution remaining on the coated wire may be removed and desirably the coated wire may be rinsed with water. In one embodiment, the excess solution, with or without rinse water can be returned to the bath in a recycling process. At step 78, the coated wire is collected onto spool B. When spool A is empty or near empty, the coating process 62 is stopped and spool B containing coated wire is removed from the apparatus.

Although the coating process 62 is described for a single wire, multiple wires may be fed through the bath simultaneously, with each wire being electrified at a high power, as described herein. For simultaneously coating multiple wires, a minimum separation between the electrified wires should be maintained to avoid arcing and each wire may be provided with separate electrification devices and guides as well as supplied from and collected on separate spools.

### EXAMPLES:

### Example 1:

An aluminum wire was immersed in an electrolyte comprising dissolved Ti, phosphate and an etchant. The aluminum wire was 0.76 mm in diameter and had a residence time in the bath of 10 seconds at 490 Volts (Peak Voltage) and 185 Amps. The wire was removed from the electrolyte bath and coating thickness and content was measured. About 10 microns of titania-containing electroceramic coating was present.

The titania coated wire was tested against two commercially available benchmark copper wires conventionally coated with an insulating coating by the manufacturer. Copper Wire Benchmark 1 was a copper magnet wire 0.74 mm in diameter coated with an organic insulating coating. The wire was removed from a wire coil of an electrical drill motor from an 18 V cordless Craftsman brand drill commercially available from Sears. Copper Wire Benchmark 2 was a commercially available copper magnet wire 0.66 mm in diameter coated with an organic insulating coating. The wire is commercially available from EIS Wire and Cable, and the organic insulating coating on the wire was reported by the manufacturer as being polyester (amide) (imide) overcoated with polyamideimide, Thermal class 200C. All three samples were tested for initial electrical insulation performance of their coatings, see starting resistance below. The resistance in all samples was measured between the outer surface of the coating and a core region of the sample; for samples where the coating had been removed, the measurement was taken from the outer surface of the wire.

In Test A, a first set of samples was heated to 450°C for a residence time of eight hours, cooled to ambient temperature and their resistance was measured.

A second set of samples was subjected to Test B, where all samples were heated to 620°C for a residence time of one hour, cooled to ambient temperature and their resistance was measured.

**TABLE 1**

| Conductor | Initial resistance | Resistance after Test A | Resistance after Test B |
|---|---|---|---|
| Comparative Example 1A: | 6.0 Megaohms | <0.1 ohms, Insulation burnt off by test. | Insulation failed at 450 °C |
| Copper Wire Benchmark 1 | | | |
| Wire diameter = 0.74 mm | | | |
| Comparative Example 1B: | 6.0 Megaohms | <0.1 ohms, Insulation burnt off by test. | Insulation failed at 450 °C |
| Copper Wire Benchmark 2 | | | |
| Wire diameter = 0.66 mm | | | |
| Example 1: | 20 Megaohms | 7.0 Megaohms | 7.0 Megaohms |
| Titania Coated A1 | | | |
| Wire diameter = 0.76 mm | | | |

The above results show that the bare titania coated aluminum electrical conductor of Example 1 maintained insulating ability of 7 Megaohms after exposure to high temperatures of 450 to 620 °C. In contrast, the organic coatings of Comparative Example 1A, and even Comparative Example 1B utilizing polyamideimide, lost their insulating features when exposed to these high temperatures.

### Example 2:

Insulation testing and hot spot testing were performed on electrical conductors having a coating according to the present disclosure with a second insulating organic layer applied to the outer surface of the electroceramic coating and on commercially available electrical conductor having an insulating organic layer applied by the wire manufacturer.

An aluminum wire was immersed in an electrolyte comprising dissolved Ti, phosphate and an etchant. The aluminum wire was 0.76 mm in diameter had a residence time in the bath of 10 seconds at 410 Volts (Peak voltage). The wire was removed from the electrolyte bath and coating thickness and content was measured. About 10 microns of titania-containing electroceramic coating was present on the aluminum conductor wire. An additional outer insulating organic sheath with 0.36 mm thickness was provided on the outer surface of the titania containing coating. The outer insulating organic sheath was Ethylene ChloroTriFluoroEthylene (ECTFE fluoro polymer), commercially available from Solvay Specialty Polymers USA, LLC under the brand name Halar®.

The titania coated wire was tested against a commercially available benchmark copper wire conductor taken from a standard automotive trailer hitch wiring harness. The conductor had an overall diameter of 2.4 mm and contained a multistranded copper wire bundle measuring 1.024 mm (18 gage). The copper wire bundle was covered with a thick conventional insulating layer having a calculated thickness being approximately 0.69 mm.

The electrical resistance was measured between the outer surface of the sample, and a core region of the sample. All samples were tested for initial insulation performance of their coatings, see Initial Resistance below. All samples were laid on a hot plate for a time sufficient to remove portions of the outer organic insulating layer, cooled to ambient temperature and their resistance was measured. The hot plate had a temperature of 700 °C, but did not melt the aluminum wire, due to the short time taken to destroy the insulation, and possible due to the high surface area of the electroceramic coating on the aluminum wire.

**TABLE 2**

| Conductor | Initial Resistance | After melting off standard insulation on a hot plate |
|---|---|---|
| Comparative Example 2: Copper Wire Benchmark 3 | 24 Megaohms | 0.1 ohms |
| Example 2: | >30 Megaohms | 4 Megaohms |
| Aluminum wire having an inner coating layer containing titania and an outer layer of an organic insulation. | (above testing equipment range) | (even in charred insulation areas and areas free of the organic insulation) |

The above results show that aluminum electrical conductors coated with an outer layer of organic coating, and with an inner titania containing insulating layer of Example 2 had initial insulating performance (>30 Megaohms) of more than 20% higher than the conventional organic insulation of Comparative Example 2 (24 Megaohms). The above results also show that the titania coated aluminum electrical conductor of Example 2 maintained insulating ability of 4 Megaohms after charring and destruction of the organic insulating outer layer. In contrast, the organic coatings of Comparative Example 2, lost their insulating features and where destroyed when exposed to these high temperatures.

### Example 3:

A thermal shock test was performed on samples of coated aluminum alloy conductor according to the present disclosure having a metal oxide coating comprising titanium dioxide and aluminum oxide, and on samples of a conventional anodized aluminum alloy conductor. The conventional anodized aluminum alloy conductors were anodized in a Class 1 sulfuric acid anodizing process, and the resulting oxidation layers were about 18 microns in thickness on samples of Comparative Example 3.

Samples of aluminum alloy wire were immersed in an electrolyte comprising dissolved Ti, phosphate and an etchant. The aluminum alloy wire samples were 0.76 mm in diameter had a residence time in the bath of 10 seconds at 410 Volts (Peak voltage). The aluminum alloy wire samples were removed from the electrolyte bath and coating thickness and content was measured. About 10 microns of titania-containing electroceramic coating was present on the aluminum alloy wire samples of Example 3.

Initial electrical resistance of each of the coated aluminum alloy samples was measured and the appearance was noted. The coated aluminum alloy samples were placed in an oven at 600 °C for one hour, reaching a peak metal temperature of 600 °C, and then directly transferred into liquid nitrogen at -197 °C for 5 minutes. The samples were removed from the liquid nitrogen and allowed to warm to ambient or room temperature. The resistance was re-measured and the appearance was noted.

**TABLE 3**

| Coating | Initial electrical resistance | Appearance before thermal shock | Appearance after thermal shock | Resistance after ΔT of 797 °C thermal shock test |
|---|---|---|---|---|
| Example 3: Titania coated A1 | 20 Megaohms | Grey Blue | No visible change | 7 Megaohms |
| Comparative Example 3: Anodized A1 | 23 Megaohms | Clear/silver | Dark brown, significant delamination and spalling | 3-20 ohms (0.000003 to 0.000020 Megaohms) |

The above results show that the bare titania coated aluminum alloy electrical conductors of Example 3 showed some reduction in resistance, but maintained insulating ability of 7 Megaohms after exposure to high temperature of 600 °C, and sudden thermal shock caused by a ΔT of 797 °C. In contrast, the anodized aluminum alloy electrical conductors of Comparative Example 3, while having an initially acceptable insulating ability, lost substantially all insulating ability when exposed to the thermal shock test, retaining less than 1x10⁻⁵ of the resistance of Example 3's coating. Comparative Example 3 also showed delamination and spalling of the alumina coating.

## Claims

1. Method of making an electrical aluminum or aluminum alloy conductor provided as a wire comprising:
an electrically conductive core having an outer surface, the core comprising aluminum; and
an electrically insulating coating chemically bonded directly on the outer surface of the core, the coating comprising at least one non-aluminum metal oxide,
wherein the at least one non-aluminum metal oxide comprises titanium dioxide,
wherein the electrically insulating coating maintains an electrical resistance of at least 3 Megaohm per centimeter at ambient temperature after thermal cycling to at least 600 °C,
wherein the method comprises:
contacting a bare wire with a bath containing an aqueous solution with a precursor for the electrically insulating coating including the element Ti, the bare wire providing the core;
operating an electrification device in electrical communication with the bare wire to electrify the bare wire with a peak voltage potential of at least 140 volts up to 800 volts and an effective current of at least 20 amps and up to 1000 amps per wire and such that the bare wire acts as an anode; and electrochemically reacting the bare wire with the precursor in the bath to deposit the electrically insulating coating on an outer surface of the wire thereby producing the coated electrical conductor.

2. The method of claim 1 wherein the electrically insulating coating has a thickness being in a range of 0.5 to 50 microns.

3. The method of claim 1 wherein the electrically insulating coating further comprises aluminum oxide and has an interface with the outer surface of the core; and wherein aluminum oxide concentration is greater at the interface with the outer surface of the core and decreases with increasing distance away from the interface.

4. The method of claim 1 wherein the conductor further comprises an electrically insulating shell comprises an enamel, a sealant, an organic coating surrounding the coating, such that the coating is positioned between the shell and the core.

5. The method of claim 1 further comprising:
continuously feeding bare wire through a bath having a cathodic connection and containing the aqueous solution comprising a precursor for an electrically insulating coating;
passing the electrified bare wire through the aqueous solution comprising a precursor for an electrically insulating coating in the presence of the cathodic connection thereby passing current from the electrified bare core through said aqueous solution to the cathodic connection for a dwell time sufficient to result in the electrochemically reacting of the wire; and
continuously removing the coated electric conductor from the bath.

## Patentansprüche

1. Verfahren zum Herstellen eines elektrischen Leiters aus Aluminium oder Aluminiumlegierung, der als ein Draht bereitgestellt ist, umfassend:
einen elektrisch leitfähigen Kern, der eine Außenoberfläche aufweist, wobei der Kern Aluminium umfasst; und
eine elektrische Isolierbeschichtung, die chemisch direkt auf der Außenoberfläche des Kerns gebunden ist, wobei die Beschichtung mindestens ein Nicht-Aluminiummetalloxid umfasst, wobei das mindestens eine Nicht-Aluminiummetalloxid Titandioxid umfasst, wobei die elektrische Isolierbeschichtung einen elektrischen Widerstand von mindestens 3 Megaohm pro Zentimeter bei einer Umgebungstemperatur nach thermischer Wechselbeanspruchung bis mindestens 600 °C aufrechterhält, wobei das Verfahren umfasst:
Inberührungbringen eines blanken Drahtes mit einem Bad, das eine wässrige Lösung mit einer Vorläufersubstanz für die elektrische Isolierbeschichtung, einschließlich des Elements Ti, enthält, wobei der blanke Draht den Kern bereitstellt;
Betreiben einer Elektrifizierungsvorrichtung in elektrischer Verbindung mit dem blanken Draht, um den blanken Draht mit einem Spitzenspannungspotential von mindestens 140 Volt bis zu 800 Volt und einem Effektivstrom von mindestens 20 Ampere und bis zu 1000 Ampere pro Draht zu elektrifizieren, und derart, dass der blanke Draht als eine Anode wirkt; und
elektrochemisches Umsetzen des blanken Drahtes mit der Vorläufersubstanz in dem Bad, um die elektrische Isolierbeschichtung auf eine Außenoberfläche des Drahtes abzuscheiden, wobei dadurch der beschichtete elektrische Leiter erzeugt wird.

2. Verfahren nach Anspruch 1, wobei die elektrische Isolierbeschichtung eine Dicke aufweist, die in einem Bereich von 0,5 bis 50 Mikron liegt.

3. Verfahren nach Anspruch 1, wobei die elektrische Isolierbeschichtung ferner Aluminiumoxid umfasst und eine Schnittstelle mit der Außenoberfläche des Kern aufweist; und
wobei eine Aluminiumoxidkonzentration an der Schnittstelle mit der Außenoberfläche des Kerns größer ist und mit zunehmendem Abstand von der Schnittstelle weg abnimmt.

4. Verfahren nach Anspruch 1, wobei der Leiter ferner eine elektrische Isolierhülle umfasst, die einen Emaillack, ein Dichtungsmaterial, eine organische Beschichtung umfasst, die die Beschichtung derart umgibt, dass die Beschichtung zwischen der Hülle und dem Kern angeordnet ist.

5. Verfahren nach Anspruch 1, ferner umfassend:
kontinuierliches Zuführen von blankem Draht durch ein Bad, das eine kathodische Verbindung aufweist und die wässrige Lösung, die eine Vorläufersubstanz für eine elektrische Isolierbeschichtung umfasst, enthält;
Leiten des elektrifizierten blanken Drahtes durch die wässrige Lösung, die eine Vorläufersubstanz für eine elektrische Isolierbeschichtung in der Gegenwart der kathodischen Verbindung umfasst, wobei dadurch Strom von dem elektrifizierten blanken Kern durch die wässrige Lösung zu der kathodischen Verbindung für eine Verweilzeit geleitet wird, die ausreicht, um in dem elektrochemischen Umsetzen des Drahtes zu resultieren; und
kontinuierliches Entfernen des beschichteten elektrischen Leiters aus dem Bad.

## Revendications

1. Procédé de fabrication d'un conducteur électrique en aluminium ou en alliage d'aluminium fourni sous la forme d'un fil comprenant :
un noyau électriquement conducteur ayant une surface extérieure, le noyau comprenant de l'aluminium ; et
un revêtement électriquement isolant chimiquement lié directement sur la surface extérieure du noyau, le revêtement comprenant au moins un oxyde métallique non aluminium,
ledit oxyde métallique non aluminium comprenant du dioxyde de titane, le revêtement électriquement isolant maintenant une résistance électrique d'au moins 3 mégaohm par centimètre à température ambiante après un cyclage thermique d'au moins 600 °C, le procédé consistant à :
mettre en contact un fil nu avec un bain contenant une solution aqueuse avec un précurseur pour le revêtement électriquement isolant comprenant l'élément Ti, le fil nu fournissant le noyau ;
faire fonctionner un dispositif d'électrification en communication électrique avec le fil nu pour électrifier le fil nu avec un potentiel de tension de crête d'au moins 140 volts jusqu'à 800 volts et un courant efficace d'au moins 20 ampères et jusqu'à 1 000 ampères par fil et de telle sorte que le fil nu agit comme une anode ; et faire réagir électrochimiquement le fil nu avec le précurseur dans le bain pour déposer le revêtement électriquement isolant sur une surface extérieure du fil, produisant ainsi le conducteur électrique revêtu.

2. Procédé selon la revendication 1, dans lequel le revêtement électriquement isolant a une épaisseur se situant dans une plage de 0,5 à 50 microns.

3. Procédé selon la revendication 1, dans lequel le revêtement électriquement isolant comprend en outre de l'oxyde d'aluminium et a une interface avec la surface extérieure du noyau ; et dans lequel la concentration en oxyde d'aluminium est plus élevée au niveau de l'interface avec la surface extérieure du noyau et diminue à mesure que la distance de l'interface augmente.

4. Procédé selon la revendication 1, dans lequel le conducteur comprend en outre une coque électriquement isolante comprenant un émail, un agent d'étanchéité, un revêtement organique entourant le revêtement, de telle sorte que le revêtement est positionné entre la coque et le noyau.

5. Procédé selon la revendication 1, consistant en outre à :
alimenter en continu un fil nu à travers un bain ayant une connexion cathodique et contenant la solution aqueuse comprenant un précurseur pour un revêtement électriquement isolant ;
faire passer le fil nu électrifié à travers la solution aqueuse comprenant un précurseur pour un revêtement électriquement isolant en présence de la connexion cathodique, faisant ainsi passer le courant du noyau nu électrifié à travers ladite solution aqueuse vers la connexion cathodique pendant une durée de séjour suffisante pour entraîner la réaction électrochimique du fil ; et retirer en continu le conducteur électrique revêtu du bain.
